Europäisches Patentamt

(19) European Patent Office

Office européen des brevets

(11) Publication number: **0 091 304**
**B1**

(12) **EUROPEAN PATENT SPECIFICATION**

(45) Date of publication of patent specification: **18.06.86**

(21) Application number: **83301880.7**

(22) Date of filing: **31.03.83**

(51) Int. Cl.⁴: **G 11 B 5/09**

(54) A method and system for direct-current polarity restoration in magnetic recording.

(30) Priority: **05.04.82 US 365661**

(43) Date of publication of application:
**12.10.83 Bulletin 83/41**

(45) Publication of the grant of the patent:
**18.06.86 Bulletin 86/25**

(84) Designated Contracting States:
**DE FR GB**

(56) References cited:
**DE-A-2 712 037**
**DE-A-3 025 959**
**US-A-3 617 904**
**US-A-3 727 143**
**US-A-3 898 481**
**US-A-3 991 376**
**US-A-4 016 599**
**US-A-4 323 932**
**US-A-4 342 054**

**ELEKTRONIK, Heft 1, January 15, 1982, page 72**

(73) Proprietor: **Hewlett-Packard Company**
**Mail Stop 20 B-O 3000 Hanover Street**
**Palo Alto California 94304 (US)**

(72) Inventor: **Batey, Robert Mead**
**Route 1, Burns St.**
**Eagle Idaho 83616 (US)**
Inventor: **Petroski, Peter John**
**409 Ranch Drive**
**Eagle Idaho 83616 (US)**

(74) Representative: **Squibbs, Robert Francis**
**Hewlett-Packard Limited Nine Mile Ride**
**Wokingham Berkshire RG11 3LL (GB)**

## Description

The present invention is concerned with a method and circuit for direct-current polarity restoration in magnetic recording. When information is written onto a magnetic disc, the information is recorded in digital form. Digital square waves have vertical edges that a magnetic head can sense. Positive and negative transitions in the square wave, that is the edges, are recognized and recorded. When the magnetic head is used to read the data stored on the disc, the output is not in digital form because of the characteristics of the head and the magnetic medium.

It is frequently desirable to recreate the original digital signal initially written onto the magnetic disc. Therefore, the information read from the disc must be operated upon to approximate the original digital signal written onto the disc. The signals read from the disc may include analog signals with flat regions between peaks. If the locations where the analog signal crosses the zero reference line can be determined, the outline of the original digital signal can be approximated.

In reconstructing the digital signal, a zero-crossing detection device may be used to indicate when an applied signal crossed the base line. By this method, the signal transition edges could be detected and the original signal approximated. However, a flat region of the applied signal adjacent to the base line between peaks created an indeterminate output from the zero crossing detector. This flattening of the applied signal along the base line is called "shouldering".

Prior solutions to this shouldering phenomenon included terminating the detection of zero crossings by binary gating during the period when the flat regions occurred between the peaks of the applied signals. A binary signal was used to operate the binary gate and if the binary signal was in error, the operation of the gate was also in error causing signal bit errors in the detector output. In addition, the binary gating generator typically had a long time delay associated with its electronics. Other electronic circuits within the equipment then required a matching time delay so that the desired output could be derived in timed sequence with the delayed binary signal.

European Patent Application Publication No. 010155 discloses a magnetic recording system including a circuit for evaluating a digital signal written on a magnetic medium, the circuit comprising two circuits for generating two binary signals in response to a read analog signal, a differentiator for providing a derivative signal in response to a read signal and means for combining the binary signals and the derivative signal, the purpose being to solve the shouldering effect.

The present invention provides a circuit for restoring the DC component of a signal read from a magnetic storage medium, the circuit comprising means for providing first and second binary signals in response to a transducer signal, means, including differentiator means, for providing a derivative signal in response to the transducer signal; and means for combining the binary signals and the derivative signal; the circuit being characterized in that said means for providing first and second binary signals comprises first means responsive to a transducer signal for providing first and second signals having first and second polarity levels, respectively, said first and second signals having leading and trailing transition portions, second means coupled to the output of said first means for providing first and second binary signals in response to said first and said second signals, respectively, said differentiating means being coupled to receive each of said first and second signal states from said first means for providing a positive and a negative derivative in response to the positive and negative difference between the first derivative of each of said signals; and the circuit being further characterized by third means coupled to the output of said second means and responsive to said first and second binary signals for providing a first positive offset and a first negative offset signal, said first positive offset signal commencing on the trailing edge of said second binary signal and terminating on the leading edge of said first binary signal, said first negative offset signal commencing on the trailing edge of said first binary signal and terminating on the leading edge of said second binary signal, fourth means coupled to the output of said third means for converting said first positive offset and first negative offset to a second positive offset and a second negative offset signal, respectively, and for shifting the output level of said second positive offset and said second negative offset signals to predetermined levels, summing means coupled to the outputs of said fourth means and said differentiating means for adding said level-shifted second positive offset signal to the positive derivative and said level-shifted second negative offset signal to the negative derivative, respectively, to produce first and second composite signals, said first and second composite signals being summed differentially to provide a reconstructed signal, and detector means coupled to the output of said summing means for providing a signal output in response to a zero crossing of said reconstructed signal.

The present invention further provides a method of restoring the DC component of a signal read from a magnetic storage medium, the method comprising the steps of providing first and second binary signals in response to a transducer signal, providing a derivative signal in response to the transducer signal, and combining the binary signals and the derivative signal, the method being characterized in that the step of providing the first and second binary signals comprises the steps of providing first and second signals in response to data recorded in a storage medium having first and second polarity levels, respectively, said first and second signals having leading and trailing transition portions, providing first and second binary signals in response to said first and said second signals, respectively, the step of providing the derivative signal comprises providing a first positive offset and a first negative offset signal responsive to said first and second binary signals, said first positive offset signal commencing on the trailing edge of said second binary signal and terminating on the leading edge of said first binary signal, said first negative offset signal commencing on the trailing edge of said first binary signal and terminating on the leading edge of said second binary signal, converting said first positive offset and said first negative offset signal to a second positive offset and a second negative offset signal, respectively, and for shifting the output level of said second positive offset and said second negative offset signals in response to a predetermined level, differentiating said first and said second signals to provide a positive and a negative differential derivative, in response to the positive and negative difference between the first derivative of each of said signals, respectively, the combining step comprises providing a first and second composite signal in response to summing said level-shifted positive offset signal to the positive derivative and said level-shifted second negative offset signal to the negative derivative, respectively, said first and second composite signals being summed differentially to provide a reconstructed signal, detecting a zero crossing of said reconstructed signal and providing a signal output in response thereto.

In accordance with the present invention, a digital signal is reconstructed to its prerecorded condition and the direct-current component of the signal which is lost during recording is replaced. Polarity restoration entails shifting the shouldering region from the zero-axis or base line and restoring the zero-crossover points of the direct-current component of a signal read from a storage medium without the problems of time delay matching and single bit errors caused by binary gating.

In accordance with the illustrated embodiment, a transducer detects data recorded on a storage medium and produces isolated positive and negative analog signals which are converted to positive and negative binary signals by appropriate circuitry. These binary signals trigger an offset signal generator which provides either a positive or a negative offset signal depending upon the direction of the rate of change of the analog signal. The analog signals are also differentiated to form positive and negative differentiated analog signals which are summed with either the positive or the negative offset signal, respectively, to form a composite signal. Then the composite signal is differentially summed with the derivative of the analog signal of the opposite polarity to form a reconstructed signal which is applied to a zero-crossing detector. The detector output is a logical high-or-low-level signal which forms a binary square wave representative of the original data pattern.

There now follows a detailed description which is to be read with reference to the accompanying drawings of a system according to the present invention; it is to be clearly understood that this system has been selected for description to illustrate the invention by way of example and not by way of limitation.

In the accompanying drawings:

Figure 1 is a block diagram of a direct-current polarity restoration apparatus in accordance with a preferred embodiment of the present invention;

Figure 2 is a circuit diagram of the direct-current polarity restoration apparatus illustrating the differentiator and the peak qualification circuitry utilized in the preferred embodiment;

Figure 3 is a circuit diagram of the direct-current polarity restoration apparatus illustrating the zero-crossing detection circuitry utilized in the preferred embodiment; and

Figure 4 is a graph which illustrates signal waveforms in accordance with the operation of the apparatus shown in Figure 1.

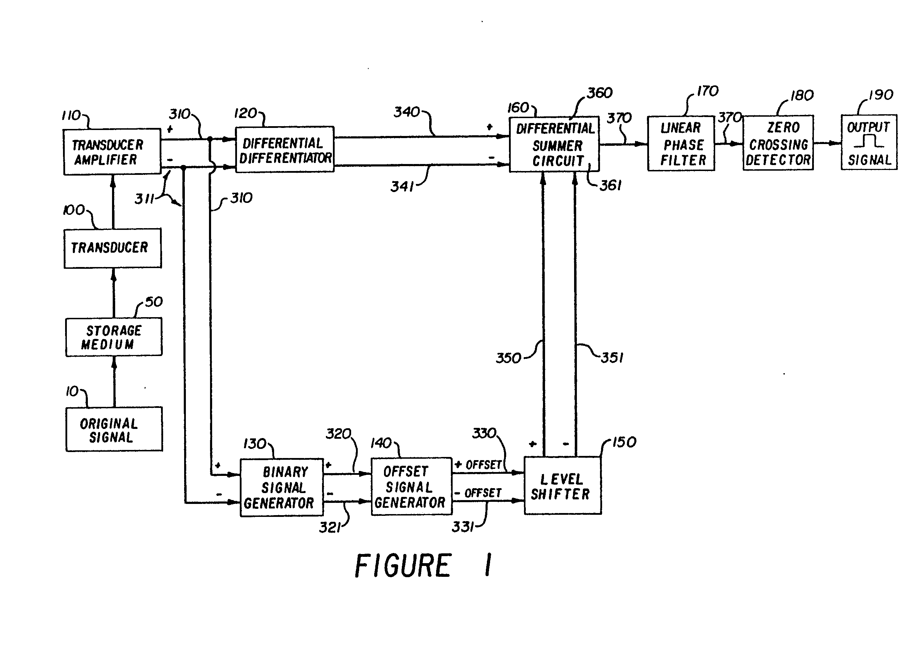

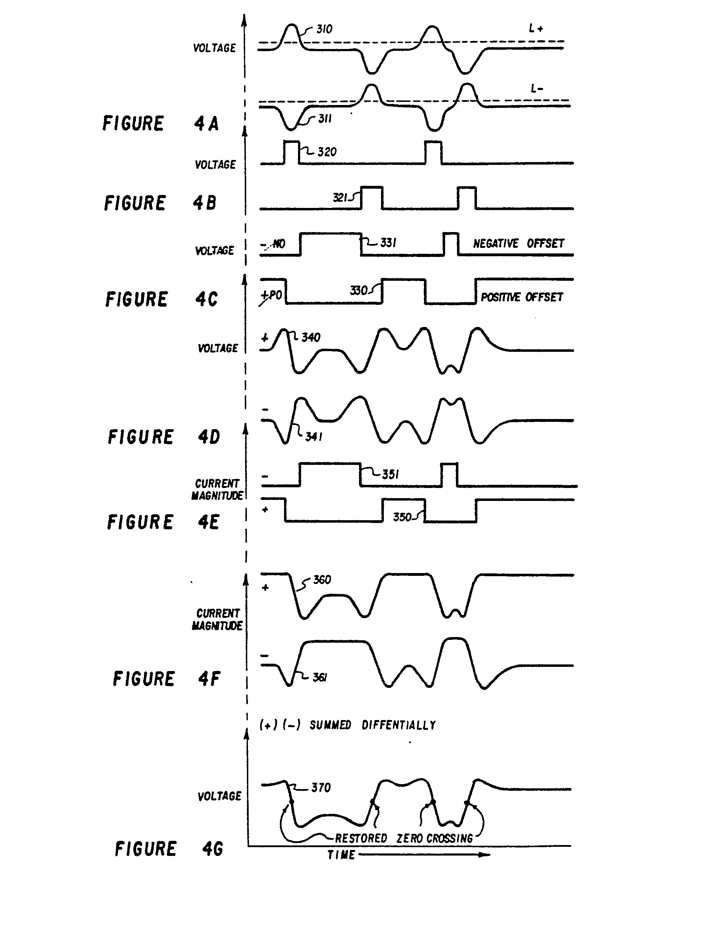

Figure 1 is a block diagram of the elements of the direct-current polarity restoration apparatus according to the present invention. An original signal 10 recorded in a storage medium 50 is detected by a transducer 100 and is provided by a transducer-amplifier 110 in the form of isolated positive and negative analog signals 310, 311, as shown in Figure 4A. The signals 310 and 311 are introduced into the direct-current polarity restoration apparatus via a differentiator 120, provided by a differential amplifier, and a binary signal generator 130, simultaneously. The generator 130 senses a predetermined signal level and changes from one binary state to the other binary state when the signal 310 or 311 crosses that level, thus converting the signals 310, 311 to binary signals 320, 321, as shown in Figure 4B. Then the signals 320 and 321 are applied to an offset signal generator 140 which combats the problem of "shouldering" by providing either an offset signal 330 or 331, as shown in Figure 4C, to increase the level of the flat regions adjacent to the zero axis to well above or below the zero axis so that a zero-crossing detector 180 can distinguish a zero-axis crossing of a signal 190. Whether the signal 330 or 331 is produced depends upon the slope of the analog signals 310, 311 at the appropriate time to eliminate the ambiguous shouldering regions adjacent to the zero axis. Now, the signals 330, 331 are applied to a level shifter 150 which converts the signal with its amplitude shifted in proportion to the shift made by the generator 140. This results in level-shifted offset signals 350, 341, as shown in Figure 4E, that are next applied to a differential summer circuit 160.

Recall that the signals 310 and 311 are also applied to the differentiator 120 which produces analog current signals 340 and 341, as shown in Figure 4D, that are derived from the applied voltage signals. Then the signals 340 and 350 or signals 341 and 351 are summed continuously within the differential summer circuit 160 to form a composite signal 360 or 361, as shown in Figure 4F. Then the signal 360 or 361 is differentially summed with the opposite polarity signal, either 340 or 341, resulting in a reconstructed signal 370, as shown in Figure 4G, which is reconverted into a voltage and then applied to the linear phase filter 170. The output of the filter 170 is applied to the zero-crossing detector circuit 180 which indicates the transitions in the signals 370 and provides a binary output signal 190 which can be processed by digital techniques. A transition of the signal 190 is equivalent to a transition of the original signal 10 recorded onto the storage medium 50.

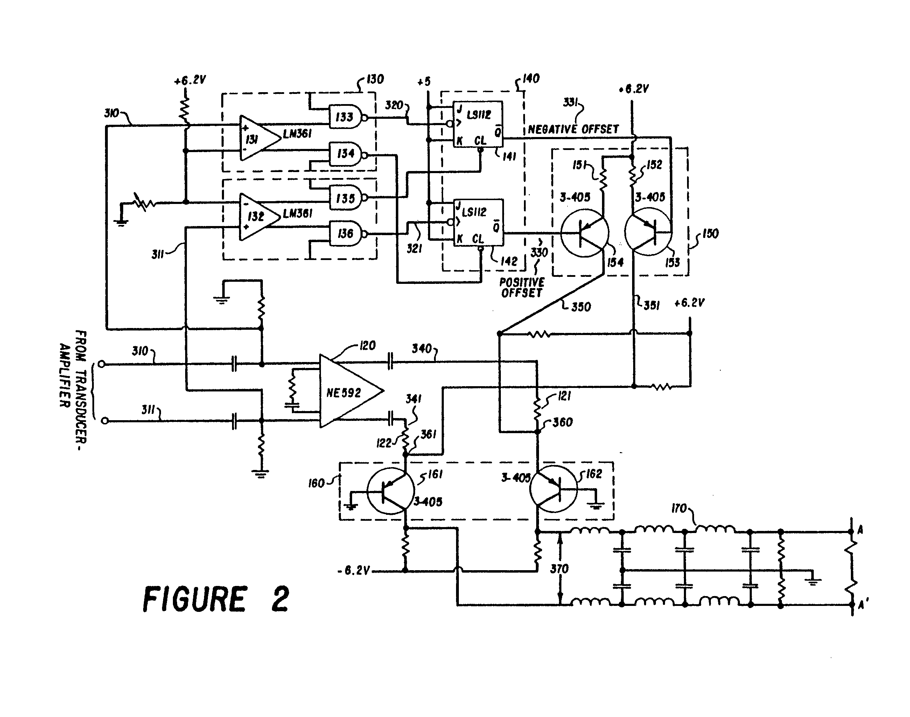

Referring now to Figure 2, there is shown a detailed circuit diagram of the direct-current polarity restoration system. As the transducer 100 senses the transitions in the storage medium 50, it converts the data into signals 310 and 311 which are amplified by the amplifier 110. These signals 310 and 311 are applied to the generator 130 which converts the signals 310, 311 to binary signals 320, 321 by sensing a predetermined non-zero level of signal amplitude and, when the signals 310 and 311 cross this level, amplifiers 131 and 132 conduct the trigger logic gates 133, 134, 135, and 136 to change the output signal level. If the signals 310 or 311 have a positive slope, the generator 130 toggles from a logical low to a logical high, and if signals 310 or 311 have a negative slope, then the generator 130 toggles from a logical high to a logical low. Next, the signals 320 and 321 are applied to the generator 140 which supplies an offset signal, either 330 or 331, to increase the signal level within the shouldering regions of the signals 310 and 311 to permit the detector 180 to identify a zero axis crossing. The two signals 320 and 321 produced by the generator 130 can be used to initiate and terminate the signals 330 and 331. Thus, the signal 330 is generated from the signal 321 within the flat shouldering region after the signal 321 but before the signal 320, and the signal 331 is generated from the signal 320 in the flat shouldering region after the signal 320 but before the signal 321. Therefore, the signal 330 increases the level above the zero axis of the signals 310 and 331 having a positive slope within the shoudering region and the signal 331 increases the level below the zero axis of the signals 310 and 331 having a negative slope within the shouldering region. Since neither the signal 310 nor 311 can be positive and negative simultaneously, then only one offset signal 330 or 331 can be generated at any instant but both signals 330 and 331 are necessary to preserve the zero crossings. The signals 330 and 331 are applied to the level-shifter 150 which converts the signals 330 and 331 from a voltage to a current as a result of a potential difference across two resistors 151 and 152. Also, two transistors 153 and 154 shift the level of the signals 330 and 331 by a factor proportional to and controlled by the shift created by the generator 140 forming the signals 350 and 351 which are applied to the summer circuit 160.

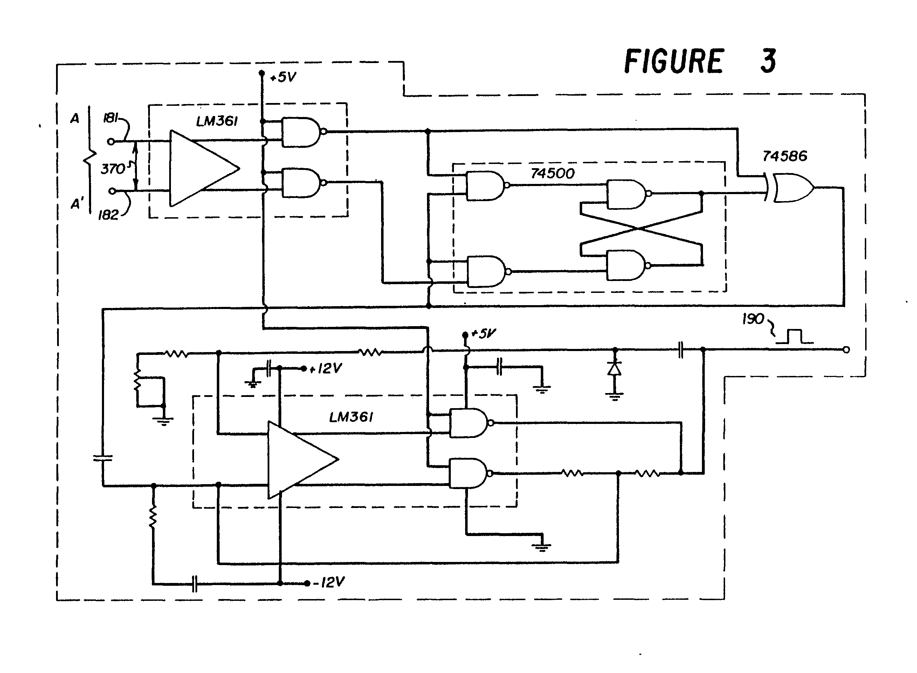

As stated above, the signals 310 and 311 are also applied to the differential amplifier 120 which produces the signal 340 which is positive relative to ground reference and produces the signal 341 which is negative relative to ground reference. Then, the signals 340 and 341, which are voltage signals, are converted to current signals resulting from the potential difference across two resistors 121 and 122. The three current signals, namely, those generated by 340, 341 and 350 or 351 are simultaneously applied to the summer circuit 160. When the signal 350 is available, it is summed with the signal 340 to provide the composite signal 360 which is then summed differentially with the signal 341 to provide the reconstructed signal 370. When the signal 351 is available, it is summed with the signal 341 to provide a composite signal 361 which is then summed differentially with the signal 340 to provide the reconstructed signal 370. Therefore, whether the signal 350 or 351 is available, only one reconstructed signal 370 is produced by the summer circuit 160 which is then applied to the filter 170 to eliminate distortion and noise before the signal 370 is applied to the detector 180. Note that the detector 180 is a differential comparator that receives two signals, 181 and 182 from the filter 170, as shown in Figures 2 and 3. If these signals were summed, they would form the signal 370. Instead, these signals are differentially compared to form the output signal 190. When the signal 181 is greater than the signal 182, the detector 180 provides a fixed signal 190 greater than zero and when the signal 182 is greater than the signal 181, the detector 180 provides a fixed signal 190 less than zero. The binary signal at the output of the detector 180 has either a positive or negative level with every transition of the signal 181 or 182 forming a logical high and every non-transition forming a logical low.

Therefore, the present invention restores the direct current component of a signal read from a magnetic storage medium.

**Claims**

1. A circuit for restoring the DC component of a signal read from a magnetic storage medium, the circuit comprising:

means for providing first and second binary signals in response to a transducer signal; means, including differentiator means, for providing a derivative signal in response to the transducer signal; and means for combining the binary signals and the derivative signal;

the circuit being characterized in that

said means for providing first and second binary signals comprises:

first means (110) responsive to a transducer signal for providing first and second signals (310, 311) having first and second polarity levels, respectively, said first and second signals having leading and trailing transition portions;

second means (130) coupled to the output of said first means for providing first and second binary signals (320, 321) in response to said first and said second signals respectively;

said differentiating means (120) being coupled to receive each of said first and second signals (310, 311) from said first means for providing a positive and a negative derivative (340, 341), in response to the positive and negative difference between the first derivative of each of said first and second signals;

and the circuit being further characterized by

third means (140) coupled to the output of said second means and responsive to said first and second binary signals for providing a first positive offset (330) and a first negative (331) offset signal, said first positive offset signal commencing on the trailing edge of said second binary signal (321) and terminating on the leading edge of said first binary signal (320), said first negative offset signal (331) commencing on the trailing edge of said first binary signal (320) and terminating on the leading edge of said second binary signal (321);

fourth means (150) coupled to the output of said third means for converting said first positive offset and first negative offset signal to a second positive offset and a second negative offset signal (350, 351), respectively, and for shifting the output level of said second positive offset and said second negative offset signals to predetermined levels;

summing means (160) coupled to the outputs of said fourth means and said differentiating means for adding said level-shifted second positive offset signal (350) to the positive derivative (340) and said level-shifted second negative offset signal (351) to the negative derivative (341), respectively, to produce first and second composite signals being summed differentially to provide a reconstructed signal (370); and

detector means (180) coupled to the output of said summing means for providing a signal output (190) in response to a zero crossing of said reconstructed signal.

2. A method of restoring the DC component of a signal read from a magnetic storage medium, the method comprising the steps of

providing first and second binary signals in response to a transducer signal, providing a derivative signal in response to the transducer signal; and combining the binary signals and the derivative signal;

the method being characterized in that

the step of providing the first and second binary signals comprises the steps of:

providing first and second signals in response to data recorded in a storage medium having first and second polarity levels, respectively, said first and second signals having leading and trailing transition portions;

providing first and second binary signals in response to said first and said second signals, respectively;

the step of providing the derivative signal comprises providing a first positive offset and a first negative offset signal responsive to said first and second binary signals, said first positive offset signal commencing on the trailing edge of said second binary signal and terminating on the leading edge of said first binary signal, said first negative offset signal commencing on the trailing edge of said first binary signal and terminating on the leading edge of said second binary signal;

converting said first positive offset and said first negative offset signal to a second positive offset and a second negative offset signal, respectively, and for shifting the output level of said second positive offset and said second negative offset signals in response to predetermined levels;

differentiating said first and said second signals to provide a positive and negative differential derivative, in response to the positive and negative difference between the first derivative of each of said first and second signals, respectively;

the combining step comprises

providing a first and second composite signal in response to summing said level-shifted positive offset signal to the positive derivative and said level-shifted second negative offset signal to the negative derivative, respectively, said first and second composite signals being summed differentially to provide a reconstructed signal and providing a signal output in response thereto.

**Patentansprüche**

1. Schaltung zur Wiederherstellung der Gleichstromkomponente eines aus einem Magnetspeichermittel ausgelesenen Signals,

mit Mitteln zum Bereitstellen erster und zweiter Binärsignale als Reaktion auf ein Wandlersignal; Mitteln, einschliesslich von Differentiatormitteln, zum Bereitstellen eines abgeleiteten Signals als Reaktion auf das Wandlersignal; und Mitteln zum Kombinieren der Binärsignale und des abgeleiteten Signals;

dadurch gekennzeichnet, dass

besagtes Mittel zum Bereitstellen erster und zweiter Binärsignale

ein auf ein Wandlersignal zum Bereitstellen erster und zweiter Signale (310, 311) mit ersten bzw. zweiten Polaritätspegeln reagierendes erstes Mittel (110) umfasst, wobei diese ersten und zweiten Signale vorlaufende und nachlaufende Uebergangsteile aufweisen;

ein an den Ausgang des besagten ersten Mittels gekoppeltes zweites Mittel (130) zum Bereitstellen erster und zweiter Binärsignale (320, 321) als Reaktion auf die besagten ersten bzw. besagten zweiten Signale;

wobei das besagte Differenziermittel (120) zum Aufnehmen jedes der besagten ersten und zweiten Signale (310, 311) vom besagten ersten Mittel zum Bereitstellen einer positiven und einer negativen Ableitung (340, 341) als Reaktion auf den positiven und negativen Unterschied zwischen der ersten Ableitung jedes der besagten ersten und zweiten Signale angeschlossen ist;

und weiterhin gekennzeichnet durch

ein an den Ausgang des besagten zweiten Mittels angeschlossenes und auf besagte erste und zweite Binärsignale ansprechendes drittes Mittel (140) zum Bereitstellen eines ersten positiven Abweichungssignals (330) und eines ersten negativen (331) Abweichungssignals, wobei das besagte erste positive Abweichungssignal an der Rückflanke des besagten zweiten Binärsignals (321) beginnt und an der Vorderflanke des besagten ersten Binärsignals (320) endet, das besagte erste negative Abweichungssignal (331) an der Rückflanke des besagten ersten Binärsignals (320) beginnt und an der Vorderflanke des besagten zweiten Binärsignals (321) endet;

ein an den Ausgang des besagten dritten Mittels angeschlossenes viertes Mittel (150) zum Umwandeln des besagten ersten positiven Abweichungssignals und ersten negativen Abweichungssignals zu einem zweiten positiven Abweichungssignal bzw. einem zweiten negativen Abweichungssignal (350, 351), und zum Verschieben des Ausgangspegels der besagten zweiten positiven Abweichungs- und besagten zweiten negativen Abweichungssignale auf vorbestimmte Pegel;

ein an die Ausgänge des besagten vierten Mittels und des besagten Differenziermittels angeschlossenes Summiermittel (160) zum Zusammenaddieren des besagten pegelverschobenen zweiten positiven Abweichungssignals (350) mit der positiven Ableitung (340) bzw. des besagten pegelverschobenen zweiten negativen Abweichungssignals (351) mit der negativen Ableitung (341) zum Erzeugen von ersten und zweiten, zum Bereitstellen eines wiederhergestellten Signals (370) differential summierten zusammengesetzten Signalen; und

ein an den Ausgang des besagten Summiermittels angeschlossenes Detektormittel (180) zum Bereitstellen eines Ausgangssignals (190) als Reaktion auf einen Nulldurchgang des besagten wiederhergestellten Signals.

2. Verfahren zum Wiederherstellen der Gleichstromkomponente eines aus einem Magnetspeichermittel ausgelsenen Signals, mit folgenden Verfahrensschritten der Bereitstellung erster und zweiter Binärsignale als Reaktion auf ein Wandlersignal; Bereitstellung eines abgeleiteten Signals als Reaktion auf das Wandlersignal; und des Kombinierens der Binärsignale und des abgeleiteten Signals;

dadurch gekennzeichnet, dass

der Schritt des Bereitstellens der ersten und zweiten Binärsignale die folgenden Schritte umfasst:

Bereitstellen erster und zweiter Signale als Reaktion auf in einem Speichermittel aufgeziechnete Daten mit ersten bzw. zweiten Polaritätspegeln, wobei die besagten ersten und zweiten Signale vorlaufende und nachlaufende Uebergangsteile aufweisen;

Bereitstellen erster und zweiter Binärsignale als Reaktion auf besagte erste bzw. besagte zweite Signale;

der Schritt des Bereitstellens des abgeleiteten Signals das Bereitstellen eines auf besagte erste und zweite Binärsignale reagierenden ersten positiven Abweichungssignals und eines ersten negativen Abweichungssignals umfasst, wobei das besagte erste positive Abweichungssignal an der Rückflanke des besagten zweiten Binärsignals beginnt und an der Vorderflanke des besagten ersten Binärsignals endet, und das besagte erste negative Abweichungssignal an der Rückflanke des besagten ersten Binärsignals beginnt und an der Vorderflanke des besagten zweiten Binärsignals endet;

Umwandeln des besagten ersten positiven Abweichungssignals und besagten ersten negativen Abweichungssignals zu einem zweiten positiven Abweichungssignal bzw. einem zweiten negativen Abweichungssignal, und zum Verschieben des Ausgangspegels der besagten zweiten positiven Abweichungssignale und besagten zweiten negativen Abweichungssignale als Reaktion auf vorbestimmte Pegel;

Differenzieren der besagten ersten und besagten zweiten Signale zum Bereitstellen einer positiven und einer negativen Differentialableitung als Reaktion auf den positiven und negativen Unterschied zwischen der ersten Ableitung aller besagten ersten bzw. zweiten Signale;

der Kombinierschritt

Bereitstellen eines ersten und zweiten zusammengesetzten Signals als Reaktion auf die Summierung des besagten pegelverschobenen positiven Abweichungssignals mit der positiven Ableitung bzw. des besagten pegelverschobenen zweiten negativen Abweichungssignals mit der negativen Ableitung umfasst, wobei die besagten ersten und zweiten zusammengesetzten Signale zur Bereitstellung eines wiederhergestellten Signals differential summiert werden und als Reaktion darauf ein Ausgangssignal bereitstellen.

**Revendications**

1. Circuit pour régénérer la composante continue d'un signal lu sur un support d'enregistrement magnétique, comprenant:

un dispositif pour produire un premier et un second signal binaire en réaction à un signal de transducteur, un dispositif, comprenant un dispositif différentiateur, pour produire un signal dérivé en réaction au signal de transducteur, et un dispositif pour combiner les signaux binaires et le signal dérivé,

le circuit étant caractérisé en ce que

le dispositif destiné à produire un premier et un second signal binaire comprend:

un premier dispositif (110) réagissant à un signal de transducteur pour produire un premier et un second signal (310, 311) comportant, respectivement, un premier et un second niveau de polarité, le premier et le second signal comportant des parties de transition antérieure et postérieure,

un second dispositif (130) couplé à la sortie du premier dispositif pour produire un premier et un second signal binaire (320, 321) en réaction au premier et au second signal, respectivement,

le dispositif différentiateur (120) étant couplé pour recevoir chacun des premier et second signaux (310, 311) du premier dispositif afin de produire un signal dérivé positif et un signal dérivé négatif (340, 341) en réaction aux différences positive et négative avec le premier signal dérivé de chacun des premier et second signaux,

et le circuit étant en outre caractérisé par:

un troisième dispositif (140) couplé à la sortie du deuxième et réagissant au premier et au second signal binaire pour produire un premier signal à décalage positif (330) et un premier signal à décalage négatif (331), le premier signal à décalage positif débutant au flanc arrière du second signal binaire (321) et se terminant au flanc avant du premier signal binaire (320), le premier signal à décalage négatif (331) débutant au flanc arrière du premier signal binaire (320) et se terminant au flanc avant du second signal binaire (321),

un quatrième dispositif (150) couplé à la sortie du troisième pour convertir le premier signal à décalage positif et le premier signal à décalage négatif en un second signal à décalage positif et un second signal à décalage négatif (350, 351), respectivement, et pour déplacer le niveau de sortie du second signal à décalage positif et du second signal à décalage négatif vers des niveaux prédéterminés,

un dispositif sommateur (160) couplé aux sorties du quatrième dispositif et du dispositif différentiateur pour additionner le second signal à décalage positif à niveau décalé (350) au signal dérivé positif (340) et le second signal à décalage négatif à niveau décalé (351) au signal dérivé négatif (341), respectivement, en vue de produire un premier et un second signal composite qui sont sommés de manière différentielle afin de produire un signal reconstruit (370) et,

un dispositif détecteur (180) couplé à la sortie du dispositif sommateur pour fournir une sortie de signal (190) en réaction à un passage par zéro du signal reconstruit.

2. Procédé pour régénérer la composante continue d'un signal lu sur un support d'enregistrement magnétique, ce procédé comprenant les opérations consistant:

à produire un premier et un second signal binaire en réaction à un signal de transducteur, à produire un signal dérivé en réaction au signal de transducteur et à combiner les signaux binaires et le signal dérivé,

le procédé étant caractérisé en ce que

l'opération consistant à produire le premier et le second signal binaire implique:

la production du premier et du second signal en réaction aux données enregistrées dans un support d'enregistrement avec un premier et un second niveau de polarité, respectivement, le premier et le second signal présentant des parties de transition avant et arrière,

la production d'un premier et d'un second signal binaire en réaction au premier et au second signal, respectivement,

l'opération consistant à produire le signal dérivé implique la production d'un premier signal à décalage positif et d'un premier signal à décalage négatif en réaction au premier et au second signal binaire, le premier signal à décalage positif débutant au flanc arrière du second signal binaire et se terminant au flanc avant du premier signal binaire, le premier signal à décalage négatif débutant au flanc arrière du premier signal binaire et se terminant au flanc avant du second signal binaire,

la conversion du premier signal à décalage positif et du premier signal à décalage négatif en un second signal à décalage positif et un second signal à décalage négatif, respectivement, et pour déplacer le niveau de sortie du second signal à décalage positif et du second signal à décalage négatif en réaction à des niveaux prédéterminés,

la différentiation du premier et du second signal pour produire un un signal dérivé, différentiel positif et négatif, en réaction à la différence positive et négative entre le premier signal dérivé de chacun des premier et second signaux, respectivement,

l'opération de combinaison impliquant

la production d'un premier et d'un second signal composite en réaction à la sommation d'une part du signal à décalage positif à niveau déplacé et du signal dérivé positif et d'autre part du second signal à décalage négatif à niveau déplacé et du signal dérivé négatif, respectivement, le premier et le second signal composite étant sommés de manière différentielle pour produire un signal reconstruit et produisant un signal de sortie en réaction à cette détection.

FIGURE 1

FIGURE 2

FROM TRANSDUCER-
AMPLIFIER

FIGURE 3

0 091 304

FIGURE 4A

FIGURE 4B

FIGURE 4C

FIGURE 4D

FIGURE 4E

FIGURE 4F

FIGURE 4G

4